# EUROPEAN PATENT APPLICATION

(11) **EP 4 167 113 A1**
(43) Date of publication of application: **19.04.2023**
(21) Application number: 22193129.8
(22) Date of filing: 31.08.2022
(51) Int. Cl.: G06F 21/32, H04L 9/40

(54) **METHODS AND SYSTEMS FOR PROVIDING A USER WITH SECURE ACCESS TO AN ONLINE ACCOUNT**

(30) Priority: 12.10.2021 GB 202114577
(71) Applicant: ValidSoft Limited, Dublin 2, 662881 (IE)
(72) Inventor: PETERSEN, John, Dublin, 2 662881 (IE); CARROLL, Patrick Matthew, Dublin, 2 662881 (IE)
(74) Representative: Marks & Clerk LLP

(57) **Abstract**

A method for providing a user with secure access to an online account, the method comprising: receiving, from an institution hosting the user account, a message containing data to be used in obtaining access to the user account, issuing a request to a communication device of the user to provide a voice sample to be used in authenticating the user, receiving a voice sample from the user, performing voice authentication based on the voice sample, and in the event the voice authentication is successful, providing the user with the data to be used in obtaining access to the user account.

## Description

### FIELD

Embodiments described herein relate to methods and systems for providing a user with secure access to an online account.

### BACKGROUND

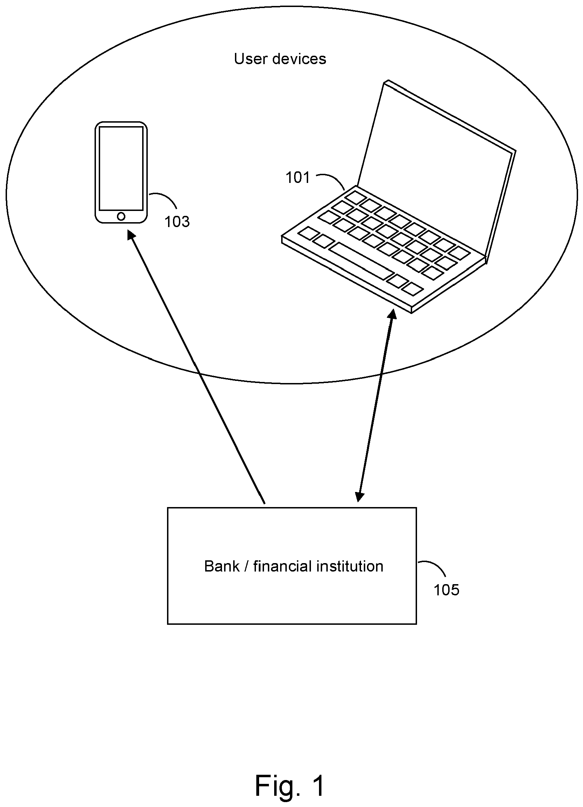

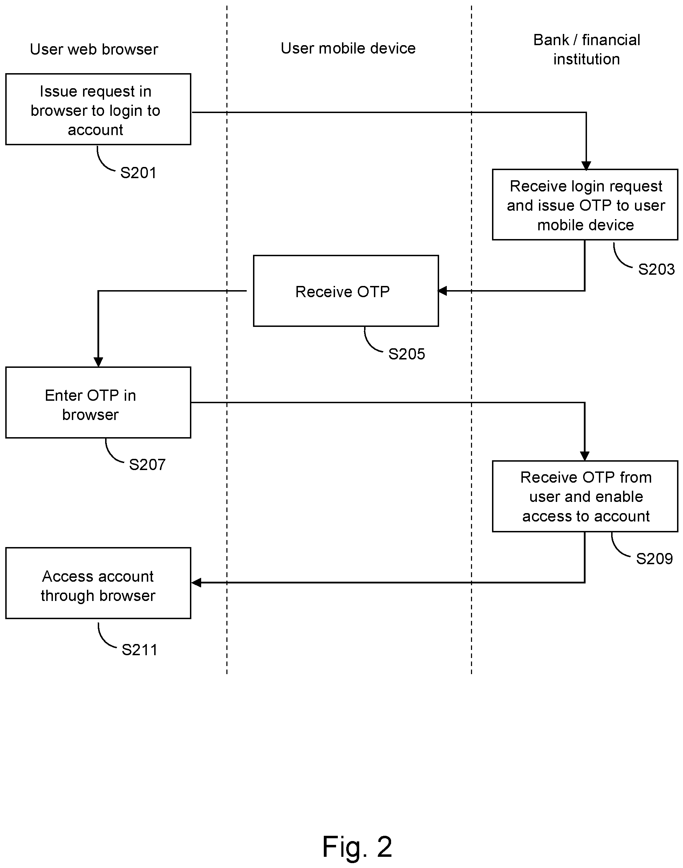

Numerous institutions, including banks, use two-factor authentication to protect online transactions, such as electronic money transfers. Figure 1 shows a system suitable for implementing two-factor authentication. Here, a user uses their computing device 101 to access their bank account online through a web-based portal. The user's mobile phone 103 provides an additional layer of security when accessing the bank account through the web. This can be understood by reference to Figure 2, which shows a sequence of steps carried out by the different components of the system. The process commences with the user navigating to the online-portal in the web browser and inputting their login details (step S201). The login details may include, for example, a username and password that the user has previously set. The bank's internet banking platform receives the login details and checks that the password matches the username. In the event the password is correct, the banking platform generates a One-time Passcode (OTP) and transmits this to the user's mobile phone device in the form of an SMS message (step S203). The user receives the OTP on their phone (step S205) and inputs the OTP into the web browser (step S207). The OTP is then submitted via the portal to the bank's internet banking platform. On determining that the OTP matches the one sent to the user's mobile phone, the internet banking platform authenticates the user and allows access to the user's account (step S209). The user is then able to access their account and carry out different banking transactions (payments etc.) through the online portal (step S211).

The process shown in Figure 2 can help to safeguard against fraudsters, who may obtain access to the customers' internet banking account through various nefarious means. In such cases, the fraudsters will still require the OTP in order to consummate the theft of the customers' funds. However, obtaining access to the target customer's mobile device is unlikely to be a realistic proposition for the fraudsters, hence making it difficult to obtain the OTP.

Fraudsters may, nevertheless, still access the user's account. By using a first technique known as SIM Swap, fraudsters may carry out a social engineering attack that dupes the customer's mobile network operator (MNO) into porting the customer's phone number (MSISDN) to a phone SIM controlled by the fraudster. The genuine customer's phone will now be off-network and the fraudster will receive all calls and SMS messages sent to that number, including the OTP from the bank.

A second technique is to hack the mobile network itself to access the OTP. The network protocol responsible for carrying and terminating calls and SMS messages is known as Signalling System 7 (SS7) and is the backbone of the global mobile network. SS7 is known to be susceptible to hacking from sophisticated fraudsters who can access OTPs without having to perform a SIM Swap. This approach may not raise any suspicion on the part of the customer, since their phone will continue to work as normal.

Although solutions have been proposed for SIM Swap detection, it remains difficult to detect an SS7 hack in real time. When transmitting OTPs over the global mobile network, there is no way to guarantee that the OTPs will not be fraudulently accessed. It follows that there is need to further enhance the security of the two-factor authentication process.

### SUMMARY

According to a first aspect of the present invention, there is provided a method for providing a user with secure access to an online account, the method comprising:
receiving, from an institution hosting the user account, a message containing data to be used in obtaining access to the user account;
issuing a request to a communication device of the user to provide a voice sample to be used in authenticating the user;
receiving a voice sample from the user;
performing voice authentication based on the voice sample; and
in the event the voice authentication is successful, providing the user with the data to be used in obtaining access to the user account.

The communication device may be a mobile phone.

Issuing a request to the communication device to provide a voice sample may comprise placing a call to the communication device, the voice sample being received during the call.

The data to be used in obtaining access to the user account may be transcribed into audio data. Providing the user with the data to be used in accessing the account online may comprise communicating the audio data to the user as part of the call.

Issuing a request to the communication device to provide a voice sample may comprise transmitting a message to a messaging application installed on the communication device, requesting the user to record a voice sample.

Performing voice authentication on the voice sample may comprise performing biometric voice authentication.

The voice sample may comprise a random set of letters, words or numbers or a combination of two or more of these.

The data to be used in obtaining access to the user account may comprise a one-time password OTP. The OTP may be generated by the institution responsive to the user performing a first log in stage in a website hosted by the institution.

The message containing data to be used in obtaining access to the user account may be received as an SMS message from the institution.

According to a second aspect of the present invention, there is provided a computer readable medium comprising computer executable instructions that when executed by a computer will cause the computer to carry out a method according to the first aspect of the invention.

According to a third aspect of the present invention, there is provided an authentication system for providing a user with secure access to an online account, the system being configured to:
receive, from an institution hosting the user account, a message containing data to be used in obtaining access to the user account;
issue a request to a communication device of the user to provide a voice sample to be used in authenticating the user;
receive a voice sample from the user;
perform voice authentication based on the voice sample; and
in the event the voice authentication is successful, provide the user with the data to be used in obtaining access to the user account.

### BRIEF DESCRIPTION OF DRAWINGS

Embodiments of the invention will now be described by way of example with reference to the accompanying drawings in which:
Figure 1 shows a conventional system used for two-factor authentication when accessing a user's online account.
Figure 2 shows a conventional sequence of steps used in two-factor authentication.
Figure 3 shows a system used for two-factor authentication when accessing a user's online account according to an embodiment.
Figure 4 shows a sequence of steps used in two-factor authentication according to an embodiment.

### DETAILED DESCRIPTION

Embodiments described herein can help protect the integrity of OTPs and ensure that only the intended recipient is able to use them. Embodiments achieve this by authenticating the user's voice, prior to issuing the user with the OTP.

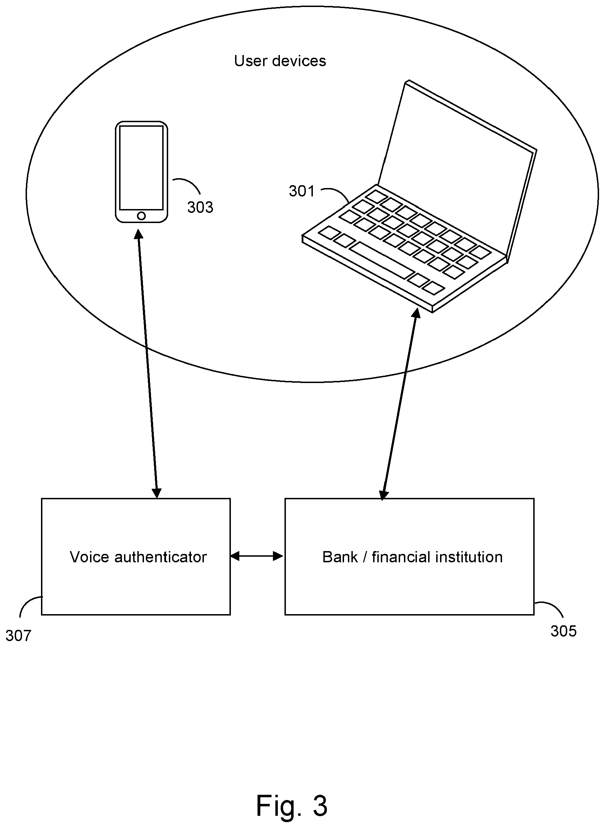

Figure 3 shows a system suitable for implementing a two-factor authentication process according to an embodiment. The system is similar to that shown in Figure 1, but includes an additional component in the form of a voice authenticator 307, which is in communication with the user's mobile phone device 303 and the bank or financial institution 305. The voice authenticator 307 may be a cloud-based entity, for example.

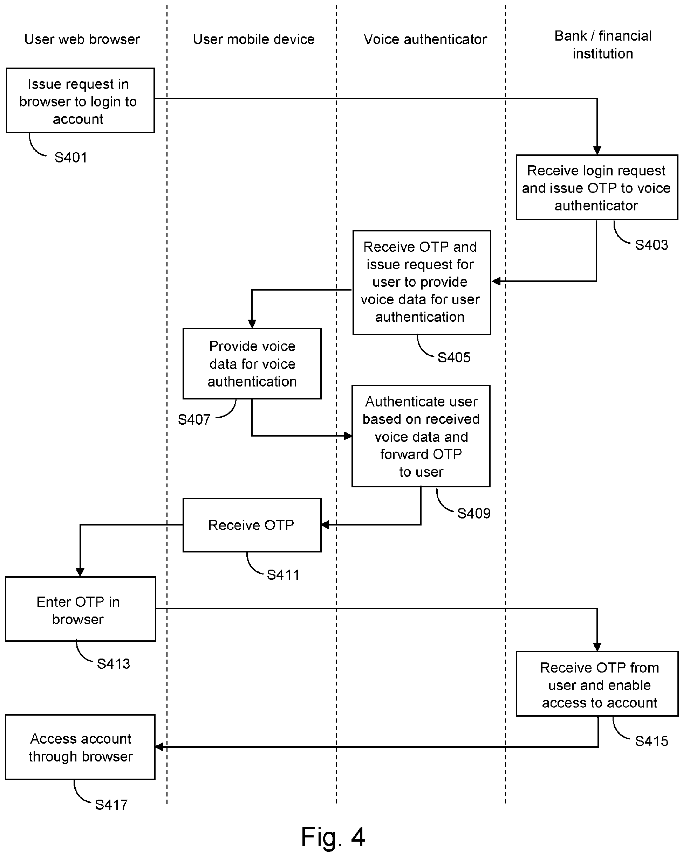

The steps carried out by the system of Figure 3 are shown schematically in Figure 4. As before, the process commences with the user navigating to the online-portal in the web browser and inputting their login details (step S401). The login details may include, for example, a username and password that the user has previously set. The bank's internet banking platform receives the login details and checks that the password matches the username. In the event the password is correct, the banking platform generates a One-time Passcode (OTP). Rather than sending the OTP to the mobile phone as shown in Figure 2, the OTP is forwarded to the voice authenticator (step S403). The OTP may be forwarded to the voice authenticator in the form of an SMS message, for example. The voice authenticator receives the OTP and issues a request to the user's mobile phone to provide a voice sample for authenticating the user (step S405). The user responds by submitting a voice sample to the voice authenticator (step S407). Having authenticated the user based on the voice sample (step S409), the voice authenticator supplies the user with the OTP (step S411), allowing the user to then enter the OTP in their web browser as before (step S413). On determining that the OTP matches the one sent to the voice authenticator, the internet banking platform authenticates the user and allows access to the user's account (step S415). The user is then able to access their account and carry out different banking transactions (payments etc.) through the online portal (step S417). If the user does not enter the OTP in the browser within a certain time limit, the login page may "timeout", requiring the user to restart the login process and obtain a new OTP from the voice authenticator.

It will be appreciated that customers / users who are not enrolled in the voice authentication scheme may simply receive an SMS message with the OTP as in the conventional method shown in Figure 2.

In some embodiments, the voice authenticator may issue the request to the user in step S405 by placing a telephone call to the user's mobile phone. The user may then submit the voice sample by answering the call and speaking into their telephone. In other embodiments, the voice authenticator may transmit a message to the user's phone, requesting the user to record a voice message and send that voice message to the voice authenticator's number or address. The voice authenticator may send the message to the user's phone as an SMS message, or may send the message to a messaging application stored on the user's phone. Upon receiving the textual message from the voice authenticator, the user may record an audio message or video message of themselves speaking, and submit this for authentication to the voice authenticator.

The voice sample used to perform the voice authentication may take one of a number of forms. In some embodiments, the voice authenticator may request that the user repeat a short phrase, or a series of digits, or any combination of letters, words or numbers. The user may be asked to repeat a name or address. The voice authenticator may generate or select a random combination of letters, words or numbers for the user to say or record. The use of a random combination of letters, words or numbers may help prevent fraudsters from pre-recording a voice message that can be played in response to the voice authenticator's request for voice authentication.

The voice authentication may comprise a biometric authentication process. In such cases, the voice authenticator may analyse the digital representation of the distortion of sound that the user's physiology causes. The audio (voice) data received from the user may be input into an algorithm that creates the digital representation as a series of floats, which may then be compared to a previously enrolled template of the user.

Embodiments that utilise voice biometric authentication may be used to distinguish between a user's (live) voice and a recording of the user's voice, by identifying anomalies in the digital representation that arise from use of a recording device. In the event that the request for voice authentication is issued by placing a telephone call to the user's mobile phone, the use of voice biometric authentication can provide additional security by determining whether the user is genuinely speaking into the telephone, or whether a recording of the user's voice is being played by a fraudster.

It will be appreciated that for banks and other institutions that utilise SMS as their OTP delivery mechanism, changing their existing systems and replacing them with an outbound telephone call solution, incorporating voice authentication, may be a major and costly undertaking. To address this problem, embodiments allow for the internet banking platform to still forward the OTP by SMS message, the difference being that the SMS message is now forwarded to the voice authenticator, rather than the user's phone. Having received the OTP by SMS from the banking platform, the voice authenticator may transform the OTP from a textual format to an audial format. Once the user's voice has been authenticated, the voice authenticator may then provide the OTP to the user by "speaking" the OTP down the phone to the user. In this way, the OTP will still be protected, without the need for the banking platform itself to change from SMS to telephony. In some embodiments, once the user's voice has been authenticated, the voice authenticator may then still deliver the OTP to the user in a textual format, such as by SMS text message.

Embodiments described herein can help safeguard against fraud associated with OTP hijacking, whether through SIM Swap, Call-forwarding or SS7 hacking. Moreover, embodiments can achieve this without the need to make any changes to the existing SMS delivery system, apart from altering the end-point address. The voice authentication process can be readily implemented in existing systems in an extremely short time frame, helping to transform such systems from being susceptible to fraud to a more secure configuration.

Although the specific embodiments described above include the use of OTPs, it will be appreciated that the data to be used in obtaining access to the user account is not limited to OTPs, but may include other information that the user may be required to input into the browser in order to access their account. For example, the voice authenticator may be used to authenticate the user before reminding them of a forgotten password or username, or else providing the user with access to a corporate or group password that is shared among multiple users. Similarly, whilst embodiments have particular utility in the financial sector and in permitting access to users' financial accounts, the methods described herein may equally be used for securing access to a user's social media accounts or work accounts, such as by permitting them to log on to a private company network, for example.

Moreover, although in the embodiments described above, the voice authenticator communicates with the user via their mobile phone, it will be appreciated that a number of different user communication devices may be used for the authentication process. The communication device need not be a mobile device, or even a phone, for example; instead, authentication may be carried out using any communication device having a microphone capable of receiving a voice sample from the user and transmitting that voice sample to the authenticator. Examples of such communication devices may include, for example, a home computer, laptop or tablet equipped with a microphone for voice calls or recordings, a personal digital assistant, or wearable computer such as a smartwatch. The communication device may have a unique address (e.g. IP address, or telephone number) via which the voice authenticator is able to connect with the user in order to perform the step of voice authentication.

Implementations of the subject matter and the operations described in this specification can be realized in digital electronic circuitry, or in computer software, firmware, or hardware, including the structures disclosed in this specification and their structural equivalents, or in combinations of one or more of them. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

While certain embodiments have been described, these embodiments have been presented by way of example only and are not intended to limit the scope of the invention. Indeed, the novel methods, devices and systems described herein may be embodied in a variety of forms; furthermore, various omissions, substitutions and changes in the form of the methods and systems described herein may be made without departing from the spirit of the invention. The accompanying claims and their equivalents are intended to cover such forms or modifications as would fall within the scope and spirit of the invention.

## Claims

1. A method for providing a user with secure access to an online account, the method comprising:
receiving, from an institution hosting the user account, a message containing data to be used in obtaining access to the user account;
issuing a request to a communication device of the user to provide a voice sample to be used in authenticating the user;
receiving a voice sample from the user;
performing voice authentication based on the voice sample; and
in the event the voice authentication is successful, providing the user with the data to be used in obtaining access to the user account.

2. A method according to any one of the preceding claims, wherein the communication device is a mobile phone.

3. A method according to claim 1 or 2, wherein issuing a request to the communication device to provide a voice sample comprises placing a call to the communication device, the voice sample being received during the call.

4. A method according to claim 3, wherein the data to be used in obtaining access to the user account is transcribed into audio data; and
wherein providing the user with the data to be used in accessing the account online comprises communicating the audio data to the user as part of the call.

5. A method according to claim any one of the preceding claims, wherein issuing a request to the communication device to provide a voice sample comprises transmitting a message to a messaging application installed on the communication device, requesting the user to record a voice sample.

6. A method according to any one of the preceding claims, wherein performing voice authentication on the voice sample comprises performing biometric voice authentication.

7. A method according to any one of the preceding claims, wherein the voice sample comprises a random set of letters, words or numbers or a combination of two or more of these.

8. A method according to any one of the preceding claims, wherein the data to be used in obtaining access to the user account comprises a one-time password OTP.

9. A method according to claim 8, wherein the OTP is generated by the institution responsive to the user performing a first log in stage in a website hosted by the institution.

10. A method according to any one of the preceding claims, wherein the message containing data to be used in obtaining access to the user account is received as an SMS message from the institution.

11. A computer readable medium comprising computer executable instructions that when executed by a computer will cause the computer to carry out a method according to any one of claims 1 to 10.

12. An authentication system for providing a user with secure access to an online account, the system being configured to:
receive, from an institution hosting the user account, a message containing data to be used in obtaining access to the user account;
issue a request to a communication device of the user to provide a voice sample to be used in authenticating the user;
receive a voice sample from the user;
perform voice authentication based on the voice sample; and
in the event the voice authentication is successful, provide the user with the data to be used in obtaining access to the user account.
